# EUROPÄISCHE PATENTSCHRIFT

(11) **EP 2 669 157 B1**
(45) Veröffentlichungstag und Bekanntmachung des Hinweises auf die Patenterteilung: **15.02.2017**
(21) Anmeldenummer: 13169724.5
(22) Anmeldetag: 29.05.2013
(51) Int. Cl.: B62D 59/04

(54) **Anhänger-Rangierantrieb**
Trailer manoeuvring drive
Entraînement de rangement pour remorque

(30) Priorität: 29.05.2012 DE 102012010540
(43) Veröffentlichungstag der Anmeldung: 04.12.2013
(73) Patentinhaber: Truma Gerätetechnik GmbH & Co. KG, 85640 Putzbrunn (DE)
(72) Erfinder: Aemisegger, Steve, 81547 München (DE); Gumpp, Daniel, 86415 Mering (DE); Müller, Jochen, 85665 Moosach (DE); Schmid, Tobias, 85435 Erding (DE); MüßLER, Klaus, 85235 Egenburg (DE); Fernandez, Ana Maria, 81739 München (DE); Müller, Jörg, 85658 Egmating (DE); Schaurer, Oliver, 85445 Oberding (DE); Möhring, Mario, 85408 Gammelsdorf (DE); Venschott, Mathias, 81825 München (DE)
(74) Vertreter: Prinz & Partner mbB

(56) Entgegenhaltungen:
- EP-A1- 1 714 858
- EP-A1- 2 208 661
- DE-U1-202005 006 693
- DE-U1-202005 015 876

## Beschreibung

Die Erfindung betrifft einen Rangierantrieb für einen Anhänger, insbesondere für Wohnwagen, Bootsanhänger, Pferdeanhänger, Marktanhänger, Lastanhänger und ähnliche.

Anhänger werden üblicherweise von Zugmaschinen gezogen. So ist es bekannt, dass ein Pkw einen Wohnwagen ziehen kann. Wenn der Anhänger von der Zugmaschine abgenommen ist, wird er meist von Hand in die endgültige Position geschoben. Jedoch werden heutzutage zunehmend Anhänger im Wohnwagenbereich angeboten, die aufgrund ihrer Größe und damit ihres Gewichts nur noch unter Mühen von Hand verschoben werden können. Daher wurden Rangier- bzw. Hilfsantriebe entwickelt, die es ermöglichen, auch ohne Zugmaschine einen Anhänger mit Motorunterstützung zu verschieben bzw. zu drehen.

In der EP 1 714 858 A1 wird ein Rangierantrieb für einen Fahrzeuganhänger mit einseitig gelagerter Antriebsrolle beschrieben. Der Rangierantrieb weist einen relativ zu einem Fahrgestell des Anhängers bewegbaren Träger auf, der einen Antriebsmotor und eine Antriebsrolle trägt. Ein Bewegungsmechanismus dient zum Bewegen des Trägers zwischen einer Ruheposition, in der Antriebsrolle von einem Rad des Anhängers getrennt ist, und einer Antriebsposition in der die Antriebsrolle gegen das Rad des Anhängers gedrückt wird. Der Antriebsmotor treibt die Antriebsrolle über ein Getriebe an.

In der DE 20 2005 006 693 U1 wird eine Steuereinrichtung zur Pulsweitenmodulierten Ansteuerung eines derartigen Antriebsmotors beschrieben.

Aus der EP 2 208 661 A1 ist ein Rangierantrieb bekannt, bei dem sowohl der Antriebsmotor als auch das Getriebe innerhalb der Antriebsrolle angeordnet sind. Bei dem Antriebsmotor kann es sich um einen bürstenlosen Elektromotor handeln.

Zwar wird in der EP 2 208 661 A1 die Verwendung eines bürstenlosen Elektromotors für den Antriebsmotor vorgeschlagen. Dort aber mit dem Ziel, den Motor weitgehend im Inneren der Antriebsrolle anzuordnen, was einen hohen konstruktiven und baulichen Aufwand erfordert.

Aus der DE 20 2005 015 876 U1 ist eine Antriebseinheit bekannt, die als Radnabenantrieb ausgebildet ist. Die Antriebseinheit umfasst einen bürstenlosen Elektromotor, der einen Außenläufer aufweist.

Der Erfindung liegt die Aufgabe zugrunde, einen Rangierantrieb für einen Anhänger anzugeben, der ein verbessertes Motorkonzept aufweist.

Die Aufgabe wird durch einen Rangierantrieb für einen Anhänger mit den Merkmalen von Anspruch 1 gelöst. Vorteilhafte Ausgestaltungen sind in den abhängigen Ansprüchen angegeben.

Ein Rangierantrieb für einen Anhänger, mit einer Befestigungseinrichtung zum Befestigen an dem Anhänger, einem relativ zu der Befestigungseinrichtung bewegbaren Träger, einem von dem Träger gehaltenen Antriebsmotor, und mit einer von dem Antriebsmotor drehend antreibbaren Antriebsrolle hat als Antriebsmotor einen bürstenlosen Elektromotor mit Außenläufer. Mithilfe einer Läuferinformations-Erfassungseinrichtung ist es möglich, die Stellung oder auch die Drehbewegung bzw. Drehrichtung des Außenläufers im Antriebsmotor zu erfassen. Anhand der so gewonnenen Information kann die Motorsteuerung das Drehfeld für den Motor in einer geeigneten Weise vorgeben.

Bei einer Variante ist eine Bewegungseinrichtung vorgesehen, zum Bewegen des Trägers zwischen einer Ruheposition, in der die Antriebsrolle von einem Rad des Anhängers getrennt ist, und einer Antriebsposition, in der die Antriebsrolle gegen das Rad des Anhängers gedrückt wird.

Der Rangierantrieb weist typischerweise den relativ zu der Befestigungseinrichtung bewegbaren Träger auf, der den Antriebsmotor und die Antriebsrolle trägt. Mit Hilfe der Bewegungseinrichtung kann der Träger zwischen der Ruheposition und der Antriebsposition hin- und herbewegt werden, sodass die Antriebsrolle bei Bedarf gegen das Rad des Anhängers, insbesondere gegen die Lauffläche des Anhängerrads angedrückt oder von dem Rad abgehoben wird. Dieser Aufbau ist zum Beispiel aus der EP 1 714 858 A1 bekannt.

Im Stand der Technik ist es üblich, dass der Antriebsmotor als bürstenbehafteter Motor, zum Beispiel als Universalmotor ausgeführt ist. Erfindungsgemäß wird jedoch als Antriebsmotor ein bürstenloser Elektromotor mit Außenläufer (nachfolgend auch als Außenläufermotor bezeichnet) vorgeschlagen.

Ein Außenläufermotor hat den Vorteil, dass er ein höheres Drehmoment erzeugt als ein Innenläufermotor. Zudem kann aufgrund des erhöhten Drehmoments die Drehzahl des Motors reduziert werden, was sich vorteilhaft für die Auslegung eines zwischen dem Antriebsmotor und der Antriebsrolle erforderlichen Getriebes, insbesondere für die Anforderung an die Übersetzungsverhältnisse, auswirkt.

Durch die Bauform eines Außenläufermotors können darüber hinaus das Bauvolumen und das Gewicht spürbar reduziert werden, so dass ein höheres Leistungsgewicht erreicht werden kann. Zudem ist der Außenläufermotor besser kühlbar als ein Innenläufermotor.

Der bürstenlose Außenläufermotor kann eine Dreiphasen- oder auch Mehrphasen-Ansteuerung aufweisen. Wenn der Motor aus Sicherheitsgründen im Niedervoltbereich (zum Beispiel mit einer üblichen Batteriespannung wie 12 Volt, 24 Volt oder 48 Volt) betrieben wird, ist es zweckmäßig, wenn der Motor kurzzeitig hohe Ströme (zum Beispiel bis 90 Ampere) aufnehmen kann. Eine Versorgung mit Gleichspannung oder Wechselspannung ist möglich.

Der Antriebsmotor kann außerhalb der Antriebsrolle angeordnet sein. Auf diese Weise kann die Antriebsrolle verhältnismäßig kompakt ausgeführt werden. Da auch der Außenläufermotor nur eine geringe Baugröße aufweist, kann der Rangierantrieb insgesamt platzsparend aufgebaut werden. Dies ist insbesondere deswegen vorteilhaft, weil der Rangierantrieb typischerweise an der Unterseite des Anhängers im Bereich des Radkastens in der Nähe des anzutreibenden Anhängerrads anzuordnen ist. Der dort zur Verfügung stehende Bauraum ist in der Regel begrenzt.

Im Kraftfluss zwischen dem Antriebsmotor und der Antriebsrolle kann eine Getriebeeinrichtung vorgesehen sein. Dies ist zweckmäßig, um die Drehzahl des Außenläufermotors zu reduzieren und in eine geeignete Drehzahl für die Antriebsrolle zu wandeln. Zwar weist der Außenläufermotor für einen bürstenlosen Elektromotor im Verhältnis zu Innenläufermotoren meist eine geringere Nenndrehzahl auf. Jedoch ist auch diese Drehzahl zu hoch, um unmittelbar auf die Antriebsrolle übertragen zu werden.

Vorteilhaft kann es sein, wenn die Läuferinformations-Erfassungseinrichtung wenigstens einen oder mehrere Hall-Sensoren, z.B. drei Hall-Sensoren, oder aber eine Inkrementalscheibe bzw. einen Inkrementalgeber aufweist. Mithilfe der Hall-Sensoren kann die Lage des Außenläufers exakt bestimmt werden, wobei daraus Informationen über die Drehzahl und die Drehrichtung gewonnen werden können. Die Information über die Drehzahl kann z.B. zur hoch-genauen Ansteuerung des Antriebsmotors ausgewertet werden, wenn die Motordrehzahlen von mehreren, an einem Anhänger angeordneten Rangierantrieben miteinander abgeglichen werden soll, um eine gewünschte Gesamtbewegung des Anhängers zu erreichen.

Die Information von der Läuferinformations-Erfassungseinrichtung bzw. von den Hall-Sensoren kann dementsprechend einer Motorsteuerung zugeführt werden, mit deren Hilfe der Antriebsmotor präzise betrieben werden kann. So ist es möglich, jeweils gewünschte Motordrehzahlen präzise einzustellen, konstant zu halten oder zu variieren.

Insbesondere ist es bei Bereitstellung der Läuferinformations-Erfassungseinrichtung, z.B. mit drei Hall-Sensoren möglich, den Antriebsmotor zuverlässig, insbesondere unter Last anzufahren, weil bereits zu Beginn die korrekte Kommutierung für den Motor vorliegt. Die Hall-Sensoren können z.B. in einem Winkel von 30 oder 60 Grad am Umfang des Innenstators angeordnet sein, wobei dann am Umfang des Außenläufers entsprechend eine Anzahl von Magneten, z.B. 12 oder 14 Magnete, gleichmäßig verteilt angeordnet sind.

Es kann eine Rekuperationseinrichtung vorgesehen sein, zum Rückspeisen von Energie, wenn die Antriebsrolle zum Bremsen des Rads des Anhängers genutzt wird. Die Rekuperationseinrichtung kann dabei den Antriebsmotor aufweisen bzw. nutzen, der in diesem Fall zum Rückspeisen der Energie generatorisch betreibbar ist. Auf diese Weise kann die Rekuperationseinrichtung auch zur Regulierung der Geschwindigkeit, z.B. bei einer Bergabfahrt des Anhängers, eingesetzt werden.

Mit einer entsprechenden Motorsteuerung kann der bürsten lose Motor dementsprechend zum Bremsen des Anhängers im Betrieb genutzt werden. Die beim Bremsvorgang durch den Motor aufzunehmende Energie kann durch den generatorischen Betrieb des Motors in einen Energiespeicher, zum Beispiel in eine im Anhänger vorhandene Batterie zurückgespeist werden. Dadurch kann sich einerseits die Gesamtfahrzeit (Betriebszeit) verlängern. Andererseits können auch kleinere Batterien mit geringerer Kapazität verwendet werden.

Ergänzend oder alternativ zu der Rekuperationseinrichtung kann eine Bremseinrichtung vorgesehen sein, die ein Bremsen der Antriebsrolle bewirkt. Die Bremseinrichtung kann folglich wie die Rekuperationseinrichtung zum Bremsen bzw. Regulieren der Geschwindigkeit genutzt werden. Im Unterschied zur Rekuperationseinrichtung wird bei der Bremseinrichtung jedoch die Energie nicht gewonnen und in einem Energiespeicher gespeichert, sondern lediglich in Wärme umgewandelt.

Die Bremseinrichtung kann die Möglichkeit des generatorischen Betreibens des Antriebsmotors aufweisen. Zum generatorischen Betreiben des Antriebsmotors kann ein Wicklungskurzschluss und/oder eine Induktion eines Gegenfelds bewirkt werden. Mit Hilfe des Wicklungskurzschlusses ist es möglich, eine verhältnismäßig harte Bremsung zu erreichen. Im Falle des Wicklungskurzschlusses kann allerdings keine Energie rückgewonnen werden. Durch die Induktion des Gegenfelds kann eine weichere, sanftere Bremsung bewirkt werden, sodass sich zum Beispiel bei Bergabfahrten des Anhängers die Geschwindigkeit besser regulieren lässt. Insbesondere kann einer Überhöhung der Geschwindigkeit rechtzeitig entgegengewirkt werden.

Die Bremseinrichtung kann bei einer Variante insbesondere als Haltebremse dienen, so dass sie nicht zum Regulieren der Geschwindigkeit, sondern zum Blockieren einer Drehbewegung der Antriebsrolle oder des Antriebsmotors eingesetzt wird.

Die Bremseinrichtung kann als mechanische Bremseinrichtung oder als elektromechanische Bremseinrichtung, z.B. als Magnetbremse, ausgebildet sein.

Die Bremseinrichtung kann insbesondere direkt auf den Antriebsmotor, zum Beispiel auf den Außenläufer wirken und durch ein Bremsen des Außenläufers ein Abbremsen der Antriebsrolle bewirken.

Die Bremseinrichtung ist darüber hinaus sinnvoll, um ein Blockieren der Antriebsrolle zu erreichen, wenn der Rangierantrieb nicht betrieben wird. Aus dem Stand der Technik bekannte Rangierantriebe weisen häufig eine Getriebeeinrichtung zwischen Antriebsmotor und Antriebsrolle auf, die aufgrund ihres Wirkungsgrads eine Selbsthemmung bewirkt. Das bedeutet, dass bei einem Stillstand des Antriebsmotors die Antriebsrolle blockiert ist, sich also nicht mehr drehen kann. Wenn hingegen der Wirkungsgrad des Getriebes erhöht ist, stellt sich die Selbsthemmung nicht ein, sodass eine zusätzliche Bremswirkung erzeugt werden muss, was mit Hilfe der Bremseinrichtung möglich ist.

Die Bremseinrichtung kann stirnseitig zu dem Antriebsmotor angeordnet sein. Ergänzend oder alternativ kann die Bremseinrichtung an dem Außenläufer befestigt sein. Weiterhin ergänzend oder alternativ kann die Bremseinrichtung unmittelbar auf die Motorwelle des Antriebsmotors wirken bzw. auf der Motorwelle angeordnet sein. Auf diese Weise kann die Bremseinrichtung ein Drehen des Motors bzw. des Außenläufers verhindern, was folglich auch zu einem Blockieren der Antriebsrolle führt. Wenn die Bremseinrichtung eine Magnetbremse aufweist, kann die Magnetbremse z.B. direkt auf die Motorwelle des Außenläufermotors wirken.

Die Bremseinrichtung und der Antriebsmotor können durch eine gemeinsame Abdeckung abgedeckt sein. Ebenso ist es möglich, dass die Bremseinrichtung direkt in dem Motorgehäuse untergebracht ist. Dies erspart Gehäuseteile, Kosten und Bauvolumen. Ebenso kann die Bremseinrichtung auch direkt an dem Motorgehäuse angebracht sein, um eine unmittelbare Wirkung der Bremseinrichtung auf den Antriebsmotor bzw. die Motorwelle zu ermögichen.

Eine Steuerelektronik für den Antriebsmotor kann stirnseitig und/oder seitlich zu dem Antriebsmotor angeordnet sein. Dies ermöglicht es, dass die Steuerelektronik baulich sehr dicht bei dem Antriebsmotor vorgesehen ist. Kurze Leitungswege, ein verminderter Montageaufwand und geringe Bauraumansprüche sind die Folge.

Der Antriebsmotor kann stirnseitig eine Lagerplatte aufweisen. Ergänzend oder alternativ kann die Steuerelektronik auf der Lagerplatte angeordnet sein. Ebenso ist es möglich, dass der Antriebsmotor stirnseitig an einer Lagerplatte befestigt ist. Mit Hilfe der Lagerplatte ist es möglich, den Antriebsmotor und gegebenenfalls die Steuerelektronik bequem vorzumontieren, bevor dann die gesamte Einheit in dem Rangierantrieb verbaut wird.

Der Antriebsmotor kann einen Innenstator aufweisen, wobei der Außenläufer den Innenstator glockenförmig umgibt. Dabei kann es vorteilhaft sein, wenn der Außenläufer ein Kühllüfterrad aufweist, also das Kühllüfterrad direkt in die Glocke des Außenläufers integriert ist.

Bei modernen Rangierantrieben wird zunehmend darauf geachtet, dass sie optisch ansprechend gestaltet sind, was insbesondere dazu führt, dass die technischen Funktionsträger durch entsprechend gestaltete Verkleidungen abgedeckt werden. Gerade bei längeren Rangierfahrten mit dem Rangierantrieb ist jedoch eine effektive Motorkühlung notwendig. Bei Nutzung des Außenläufermotors kann in den Außenläufer bzw. in die Glocke des Außenläufers das Kühllüfterrad integriert sein, sodass kein Anbau eines separaten Gebläses oder Lüfterrads an die Motorwelle erforderlich ist.

Der Innenstator kann mit der Lagerplatte zu einer baulichen Einheit integriert sein. Insbesondere kann der Innenstator eine die Motorwelle umgebende Hülse bzw. Nabe aufweisen, die mit der Lagerplatte einteilig verbunden ist.

Bei einer Variante kann der Antriebsmotor einen stehenden Innenstator aufweisen, der Außenläufer den Innenstator glockenförmig umgeben und die Motorwelle an dem Außenläufer befestigt sein und durch das Innere des Innenstators geführt werden. Dadurch ist ein besonders kompakter Aufbau des Außenläufermotors möglich.

Je nach Aufbau des Rangierantriebs kann die Drehachse des Antriebsmotors parallel oder senkrecht oder in einem schrägen Winkel zu der Drehachse der Antriebsrolle verlaufen. Da der bürstenlose Außenläufermotor sehr kompakt baut, eignet er sich grundsätzlich für jede dieser Anordnungen.

Vorzugsweise ist zwischen dem Motor und dem Getriebe eine Kupplung zur Schwingungsdämpfung vorgesehen. Diese enthält üblicherweise eine dämpfendes Gummielement zwischen der Antriebs- und der Abtriebsseite, wodurch eventuelle Unwuchten oder Fluchtungsfehler ausgeglichen und Geräusche vermieden werden können.

Diese und weitere Vorteile und Merkmale der Erfindung werden nachfolgend anhand von Beispielen unter Zuhilfenahme der begleitenden Figuren näher erläutert. Es zeigen:
Fig. 1 in schematischer Draufsicht mit teilweiser Schnittdarstellung einen Rangierantrieb mit parallelen Drehachsen von Antriebsmotor und Antriebsrolle;
Fig. 2 ein Beispiel für eine perspektivische Außenansicht eines Rangierantriebs gemäß Fig. 1;
Fig. 3 eine schematische Draufsicht eines Rangierantriebs mit rechtwinklig zueinander stehenden Drehachsen von Antriebsrolle und Antriebsmotor; und
Fig. 4 eine Schnittdarstellung eines bürstenlosen Motors mit Außenläufer.

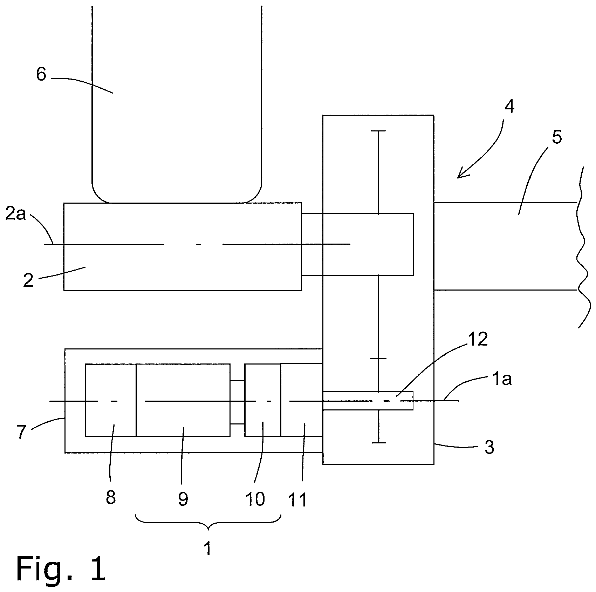

Fig. 1 zeigt in schematischer Draufsicht einen Rangierantrieb mit einem Antriebsmotor 1 und einer von dem Antriebsmotor 1 drehend antreibbaren Antriebsrolle 2.

Der Antriebsmotor 1 und die Antriebsrolle 2 sind von einem Träger 3 gehalten. Im Inneren des Trägers 3 ist auch eine Getriebeeinrichtung 4 angeordnet, die dazu dient, die verhältnismäßig hohe Drehzahl des Antriebsmotors 1 in eine niedrigere Drehzahl für die Antriebsrolle 2 zu übersetzen. Die Getriebeeinrichtung 4 ist in Fig. 1 nur schematisch dargestellt. Insbesondere kann die Getriebeeinrichtung 4 mehrere Stufen aufweisen, um das gewünschte gesamte Übersetzungsverhältnis zu erreichen. Der Träger 3 wird von einer Befestigungseinrichtung 5 gehalten, die ihrerseits an einem nicht dargestellten Fahrgestell eines Anhängers angebracht werden kann. Zum Beispiel kann die Befestigungseinrichtung 5 in Form eines Vierkantrohrs ausgeführt sein, das auf ein entsprechendes Querrohr (nicht dargestellt) aufgeschoben werden kann, wobei das Querrohr wiederum an der Unterseite des Anhängers befestigt ist.

Der Träger 3 ist relativ zu der Befestigungseinrichtung 5 mit Hilfe einer Bewegungseinrichtung 30 linear hin- und herbewegbar. Auf diese Weise kann der Träger 3 zwischen einer Ruheposition, in der die Antriebsrolle 2 von einem Rad 6 des Anhängers getrennt ist, und einer Antriebsposition, in der die Antriebsrolle 2 gegen das Rad 6 des Anhängers gedrückt wird - wie in Fig. 1 gezeigt - hin- und herbewegt werden.

Dieser Aufbau eines derartigen Rangierantriebs ist prinzipiell bekannt.

Erfindungsgemäß wird als Antriebsmotor 1 ein bürstenloser Elektromotor mit Außenläufer eingesetzt. Der Antriebsmotor 1 ist in einem Motorgehäuse 7 angeordnet. Stirnseitig, nämlich an der rückwärtigen Stirnseite des Antriebsmotors 1 ist eine Bremseinrichtung 8 vorgesehen, die insbesondere beim Stillstand des Antriebsmotors 1 zur Anwendung kommt und ein ungewolltes Drehen der Antriebsrolle 2 verhindern soll.

Die Bremseinrichtung 8 ist an der Stirnseite eines Außenläufers 9 des Antriebsmotors 1 angeordnet und wirkt direkt auf die als Antriebswelle 12 dienende Motorwelle. Der Außenläufer 9 umgibt glockenförmig einen Innenstator 10, von dem in Fig. 1 nur der aus dem Außenläufer 9 herausragende Teil dargestellt ist. Der Innenstator 10 wiederum ist an einer Lagerplatte 11 befestigt, sodass durch die Lagerplatte 11 sowohl der Antriebsmotor 1 als auch die vom Antriebsmotor 1 gehaltene Bremseinrichtung 8 gelagert ist.

Die Lagerplatte 11 kann auch in den Innenstator 10 integriert bzw. mit dem Innenstator 10 einteilig ausgeführt sein. In diesem Fall ist der aus dem Außenläufer 9 herausgeführte Teil des Innenstators 10 als Lagerschild ausgebildet, der als Lagerplatte dient.

In der bzw. an der Lagerplatte 11 kann auch eine nicht dargestellte elektronische Motorsteuerung oder Komponenten der Steuerelektronik angebracht sein. Die Lagerplatte 11 wiederum ist an dem Träger 3 befestigt. Insbesondere kann die Lagerplatte 11 direkt an das Getriebegehäuse der Getriebeeinrichtung 4 angeflanscht werden.

Selbstverständlich ist es auch möglich, den Antriebsmotor 1 mithilfe seines mit dem Innenstator 10 verbundenen Lagerschilds direkt an dem Träger 3 anzubringen, ohne Zwischenschaltung einer separaten Lagerplatte 11.

Die Motorwelle bzw. Antriebswelle 12 des Antriebsmotors 1 ragt in das Innere der Getriebeeinrichtung 4, sodass die Drehbewegung durch die Getriebeeinrichtung 4 in eine geeignete Bewegung für die Antriebsrolle 2 gewandelt werden kann.

Die Drehachse 1 a des Antriebsmotors 1 und die Drehachse 2a der Antriebsrolle 2 stehen bei der Variante von Fig. 1 parallel zueinander.

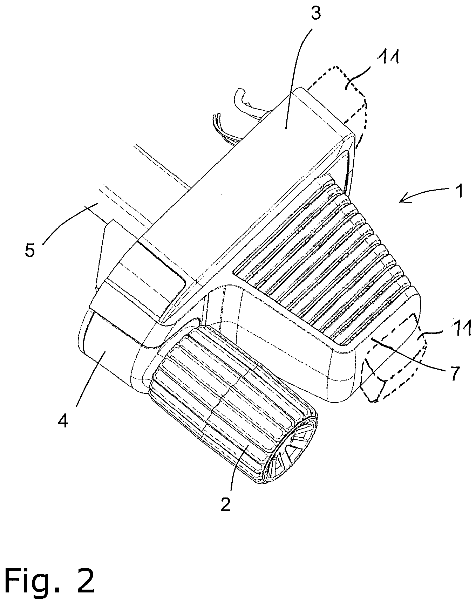

Fig. 2 zeigt in Perspektivansicht ein Beispiel für einen Rangierantrieb gemäß Fig. 1.

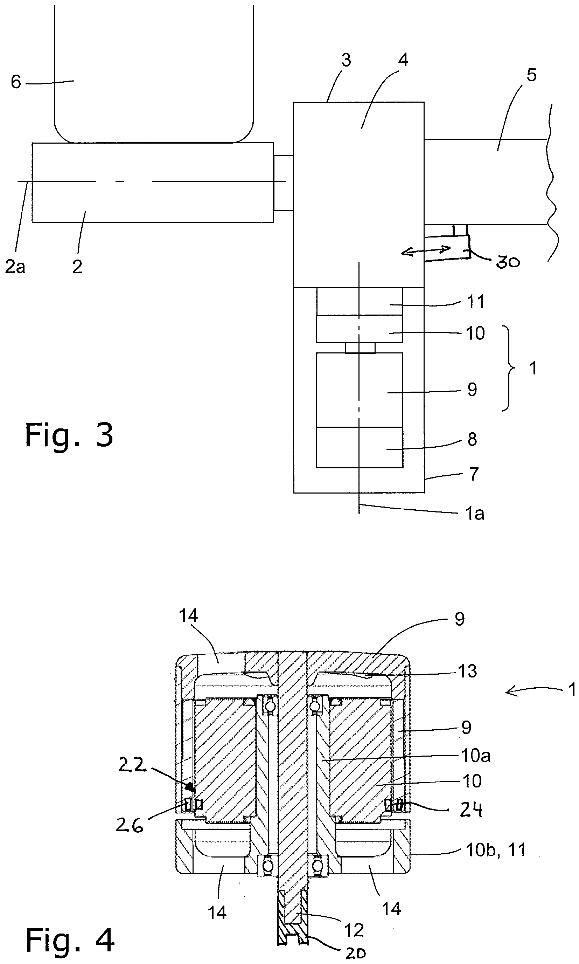

Fig. 3 zeigt eine andere Ausführungsform für einen Rangierantrieb, bei der die Drehachse 1a des Antriebsmotors 1 senkrecht zu der Drehachse 2a der Antriebsrolle 2 steht. Die weiteren Komponenten des Rangierantriebs sind im Wesentlichen identisch aufgebaut, sodass sich eine eingehende Beschreibung erübrigt.

Lediglich die Getriebeeinrichtung 4 muss derart ausgestaltet sein, dass sie die Drehbewegung des Antriebsmotors 1 über den Winkel von 90° wandeln kann. Hierzu eignen sich zum Beispiel Kegelradgetriebe oder Schneckengetriebe.

Auch bei der Variante von Fig. 3 ist der Antriebsmotor 1 als bürstenloser Elektromotor mit Außenläufer 9 ausgeführt.

Ein Beispiel für einen derartigen Außenläufermotor ist in Fig. 4 gezeigt.

Der Außenläufer 9 umgreift glockenartig den stehenden Innenstator 10. Die Antriebswelle 12 ist an dem Außenläufer 9 befestigt und wird durch das Innere des Innenstators 10 bzw. durch eine einen Teil des Innenstators 10 bildende Hülse bzw. Nabe 10a geführt. Dementsprechend ist der Außenläufer 9 mit der Antriebswelle 12 an dem Innenstator 10 gelagert.

Mit dem Innenstator 10 einstückig verbunden ist ein Lagerschild 10b, der als Lagerplatte 11 dient. Die Lagerplatte 11 kann auch als separates Teil ausgebildet sein (in Fig. 4 nicht gezeigt), so dass der Innenstator 10 auf der Lagerplatte 11 befestigt werden kann.

Im stirnseitigen Teil des Außenläufers 9 sind Flügel eines Kühllüfterrads 13 integriert. Bei Drehung des Außenläufers 9 erzeugen die Flügel des Kühllüfterrads 13 einen Luftstrom, der zur Kühlung des Antriebsmotors 1 genutzt wird. Zur ausreichenden Luftversorgung sind Lüftungsöffnungen 14 vorgesehen.

Die Bremseinrichtung 8 aus den Fig. 1 und 3 kann stirnseitig zu dem Außenläufer 9 angeordnet sein und unmittelbar auf die Antriebswelle 12 wirken. Zu diesem Zweck muss die Antriebswelle 12 an der von dem Lagerschild 10b abgewandten Seite des Außenläufers 9 verlängert sein bzw. überstehen, damit das Bremsmoment in die Antriebswelle 12 eingeleitet werden kann.

Die Steuerelektronik für den Antriebsmotor 1 kann unmittelbar auf der Lagerplatte 11 bzw. dem Lagerschild 10b angeordnet sein. Z.B. können die Komponenten der Steuerelektronik auf einer Platine aufgelötet sein, die wiederum in geeigneter Weise auf oder an der Lagerplatte 11 oder dem Lagerschild 10b befestigt ist.

Vorzugsweise ist zwischen dem Motor 1 und dem Getriebeeinrichtung 4 eine Kupplung 20 zur Schwingungsdämpfung vorgesehen. Diese Ausbildung ist unabhängig von der exakten Anordnung von Motor zu Getriebe und bezieht sich somit auf alle Ausführungsformen. Die Kupplung 20 ist symbolisch in Figur 4 dargestellt.

Die Kupplung 20 ist z.B. zwischen der Welle 12 und dem ersten Zahnrad des Getriebes zwischengeschaltet und enthält üblicherweise eine dämpfendes Gummielement zwischen der Antriebs- und der Abtriebsseite, wodurch eventuelle Unwuchten oder Fluchtungsfehler ausgeglichen und Geräusche vermieden werden können.

Es kann eine Läuferinformations-Erfassungseinrichtung 22 vorgesehen sein, zum Gewinnen einer Information über die Position und/oder die Bewegung des Außenläufers 9. Mithilfe der Läuferinformations-Erfassungseinrichtung 22 ist es somit möglich, die Stellung oder auch die Drehbewegung bzw. Drehrichtung des Außenläufers 9 im Antriebsmotor 1 zu erfassen. Anhand der so gewonnen Information kann die Motorsteuerung das Drehfeld für den Motor in einer geeigneten Weise vorgeben.

Vorteilhaft kann es dabei sein, wenn die Läuferinformations-Erfassungseinrichtung 22 wenigstens einen oder mehrere Hall-Sensoren 24, z.B. drei Hall-Sensoren, oder aber eine Inkrementalscheibe bzw. einen Inkrementalgeber aufweist.

Die Hall-Sensoren 24 können z.B. in einem Winkel von 30 oder 60 Grad am Umfang des Innenstators 10 angeordnet sein, wobei dann am Umfang des Außenläufers 9 entsprechend eine Anzahl von Magneten 26, z.B. 12 oder 14 Magnete, gleichmäßig verteilt angeordnet sind.

Wie zuvor schon erwähnt, kann eine Rekuperationseinrichtung vorgesehen sein, zum Rückspeisen von Energie, wenn die Antriebsrolle zum Bremsen des Rads des Anhängers genutzt wird. Die Rekuperationseinrichtung kann dabei den Antriebsmotor aufweisen bzw. nutzen, der in diesem Fall zum Rückspeisen der Energie generatorisch betreibbar ist. Auf diese Weise kann die Rekuperationseinrichtung auch zur Regulierung der Geschwindigkeit, z.B. bei einer Bergabfahrt des Anhängers, eingesetzt werden.

Mit einer entsprechenden Motorsteuerung kann der bürstenlose Motor dementsprechend zum Bremsen des Anhängers im Betrieb genutzt werden. Die beim Bremsvorgang durch den Motor aufzunehmende Energie kann durch den generatorischen Betrieb des Motors in einen Energiespeicher, zum Beispiel in eine im Anhänger vorhandene Batterie zurückgespeist werden. Dadurch kann sich einerseits die Gesamtfahrzeit (Betriebszeit) verlängern. Andererseits können auch kleinere Batterien mit geringerer Kapazität verwendet werden.

Eine Steuerelektronik 11 kann stirnseitig und/oder seitlich zum Antriebsmotor 1 vorgesehen sein, siehe Figur 2.

## Patentansprüche

1. Rangierantrieb für einen Anhänger, mit
- einer Befestigungseinrichtung (5) zum Befestigen an dem Anhänger;
- einem relativ zu der Befestigungseinrichtung bewegbaren Träger (3);
- einem von dem Träger (3) gehaltenen Antriebsmotor (1); und mit
- einer von dem Antriebsmotor (1) drehend antreibbaren Antriebsrolle (2);
**dadurch gekennzeichnet, dass**
- der Antriebsmotor (1) ein bürstenloser Elektromotor mit einem Außenläufer (9) ist,
wobei eine Läuferinformations-Erfassungseinrichtung (22) zum Gewinnen einer Information über die Position und/oder die Bewegung des Außenläufers (9) vorgesehen ist.

2. Rangierantrieb nach Anspruch 1, **dadurch gekennzeichnet, dass** der Antriebsmotor (1) außerhalb der Antriebsrolle (2) angeordnet ist.

3. Rangierantrieb nach Anspruch 1 oder 2, **dadurch gekennzeichnet, dass** im Kraftfluss zwischen dem Antriebsmotor (1) und der Antriebsrolle (2) eine Getriebeeinrichtung (4) vorgesehenen ist.

4. Rangierantrieb nach einem der vorangehenden Ansprüche, **dadurch gekennzeichnet, dass** die Läuferinformations-Erfassungseinrichtung (22) wenigstens einen Hall-Sensor (24) aufweist.

5. Rangierantrieb nach einem der vorangehenden Ansprüche, **dadurch gekennzeichnet, dass**
- eine Rekuperationseinrichtung vorgesehen ist, zum Rückspeisen von Energie, wenn die Antriebsrolle (2) zum Bremsen des Rads (6) des Anhängers genutzt wird; und dass
- die Rekuperationseinrichtung den Antriebsmotor (1) aufweist, der zum Rückspeisen der Energie generatorisch betreibbar ist.

6. Rangierantrieb nach Anspruch 5, **dadurch gekennzeichnet, dass** zum generatorischen Betreiben des Antriebsmotors (1) ein Wicklungskurzschluss oder eine Induktion eines Gegenfelds bewirkbar ist.

7. Rangierantrieb nach einem der Ansprüche 3 bis 6, soweit auf Anspruch 3 rückbezogen, **dadurch gekennzeichnet, dass** eine Kupplung (20) zwischen dem Motor (1) und der Getriebeeinrichtung (4) zur Schwingungsdämpfung und/oder dass eine Bremseinrichtung (8) vorgesehen sind/ist.

8. Rangierantrieb nach Anspruch 7, **dadurch gekennzeichnet, dass**
- die Bremseinrichtung (8) stirnseitig zu dem Antriebsmotor (1) angeordnet ist; und/oder dass
- die Bremseinrichtung (8) an dem Außenläufer (9) befestigt ist; und/oder
- die Bremseinrichtung unmittelbar auf einer Motorwelle (12) des Antriebsmotors (1) angeordnet ist.

9. Rangierantrieb nach einem der vorangehenden Ansprüche, **dadurch gekennzeichnet, dass** eine Steuerelektronik für den Antriebsmotor (1) stirnseitig und/oder seitlich zu dem Antriebsmotor (1) angeordnet ist.

10. Rangierantrieb nach Anspruch 9, **dadurch gekennzeichnet, dass**
- der Antriebsmotor (1) stirnseitig eine Lagerplatte (11) aufweist; und/oder dass
- die Steuerelektronik auf der Lagerplatte (11) angeordnet ist.

11. Rangierantrieb nach einem der vorangehenden Ansprüche, **dadurch gekennzeichnet, dass**
- der Antriebsmotor (1) einen Innenstator (10) aufweist;
- der Außenläufer (9) den Innenstator (10) glockenförmig umgibt; und dass
- der Außenläufer (9) ein Kühllüfterrad (13) aufweist.

12. Rangierantrieb nach Anspruch 11, **dadurch gekennzeichnet, dass**
- der Antriebsmotor (1) einen stehenden Innenstator (10) aufweist;
- der Außenläufer (9) den Innenstator (10) glockenförmig umgibt; und dass
- die Motorwelle (12) an dem Außenläufer (9) befestigt ist und durch das Innere des Innenstators (10) geführt wird.

13. Rangierantrieb nach einem der vorangehenden Ansprüche, **dadurch gekennzeichnet, dass** die Drehachse (1a) des Antriebsmotors (1) parallel oder senkrecht oder in einem schrägen Winkel zu der Drehachse (2a) der Antriebsrolle (2) verläuft.

14. Rangierantrieb nach einem der vorangehenden Ansprüche, **dadurch gekennzeichnet, dass** eine Bewegungseinrichtung (30) vorgesehen ist, zum Bewegen des Trägers (3) zwischen einer Ruheposition, in der die Antriebsrolle (2) von einem Rad (6) des Anhängers getrennt ist, und einer Antriebsposition, in der die Antriebsrolle (2) gegen das Rad (6) des Anhängers gedrückt wird.

## Claims

1. A maneuvering drive for a trailer, comprising
- a fastening device (5) for fastening to the trailer;
- a carrier (3) movable relative to the fastening device;
- a drive motor (1) held by the carrier (3); and comprising
- a drive roller (2) adapted to be rotatably driven by the drive motor (1);
**characterized in that**
- the drive motor (1) is a brushless electric motor with an external rotor (9),
a rotor information detection device (22) being provided for obtaining information on the position and/or the movement of the external rotor (9).

2. The maneuvering drive according to claim 1, **characterized in that** the drive motor (1) is arranged outside the drive roller (2).

3. The maneuvering drive according to claim 1 or 2, **characterized in that** a transmission device (4) is provided in the flux of force between the drive motor (1) and the drive roller (2).

4. The maneuvering drive according to any of the preceding claims, **characterized in that** the rotor information detection device (22) includes at least one Hall sensor (24).

5. The maneuvering drive according to any of the preceding claims, **characterized in that**
- a recuperation device is provided for feeding back energy when the drive roller (2) is utilized for braking the wheel (6) of the trailer; and **in that**
- the recuperation device includes the drive motor (1), which is operable in a generator mode for feeding back energy.

6. The maneuvering drive according to claim 5, **characterized in that** for operating the drive motor (1) in the generator mode, a winding short-circuit or an induction of an opposing field can be effected.

7. The maneuvering drive according to any of claims 3 to 6, as far as dependent on claim 3, **characterized in that** a coupling (20) for vibration damping is provided between the motor (1) and the transmission device (4) and/or that a braking device (8) is provided.

8. The maneuvering drive according to claim 7, **characterized in that**
- the braking device (8) is arranged on the end face of the drive motor (1); and/or that
- the braking device (8) is fastened to the external rotor (9); and/or
- the braking device is arranged directly on a motor shaft (12) of the drive motor (1).

9. The maneuvering drive according to any of the preceding claims, **characterized in that** an electronic control unit for the drive motor (1) is arranged on the end face and/or laterally of the drive motor (1).

10. The maneuvering drive according to claim 9, **characterized in that**
- the drive motor (1) includes a bearing plate (11) on its end face; and/or **in that**
- the electronic control unit is arranged on the bearing plate (11).

11. The maneuvering drive according to any of the preceding claims, **characterized in that**
- the drive motor (1) includes an internal stator (10);
- the external rotor (9) surrounds the internal stator (10) in a bell-shaped manner; and **in that**
- the external rotor (9) includes a cooling fan wheel (13).

12. The maneuvering drive according to claim 11, **characterized in that**
- the drive motor (1) includes an upright internal stator (10);
- the external rotor (9) surrounds the internal stator (10) in a bell-shaped manner; and **in that**
- the motor shaft (12) is fastened to the external rotor (9) and is guided through the interior of the internal stator (10).

13. The maneuvering drive according to any of the preceding claims, **characterized in that** the axis of rotation (1a) of the drive motor (1) extends parallel or perpendicular or at an oblique angle to the axis of rotation (2a) of the drive roller (2).

14. The maneuvering drive according to any of the preceding claims, **characterized in that** a moving means (30) is provided for moving the carrier (3) between a rest position, in which the drive roller (2) is separated from a wheel (6) of the trailer, and a drive position, in which the drive roller (2) is pressed against the wheel (6) of the trailer.

## Revendications

1. Entraînement de manoeuvre pour une remorque, comportant
- un moyen de fixation (5) pour la fixation sur la remorque;
- un support (3) mobile par rapport au moyen de fixation;
- un moteur d'entraînement (1) maintenu par le support (3); et comportant
- un rouleau d'entraînement (2) apte à être entraîné en rotation par le moteur d'entraînement (1);
**caractérisé en ce que**
- le moteur d'entraînement (1) est un moteur électrique sans balais qui présente un rotor extérieur (9),
un moyen de saisie (22) d'informations du rotor étant prévu pour l'acquisition d'une information concernant la position et/ou le mouvement du rotor extérieur (9).

2. Entraînement de manoeuvre selon la revendication 1, **caractérisé en ce que** le moteur d'entraînement (1) est agencé à l'extérieur du rouleau d'entraînement (2).

3. Entraînement de manoeuvre selon la revendication 1 ou 2, **caractérisé en ce qu'**un moyen de transmission (4) est prévu dans le flux de force entre le moteur d'entraînement (1) et le rouleau d'entraînement (2).

4. Entraînement de manoeuvre selon l'une des revendications précédentes, **caractérisé en ce que** le moyen de saisie (22) d'informations du rotor présente au moins un capteur à effet Hall (24).

5. Entraînement de manoeuvre selon l'une des revendications précédentes, **caractérisé en ce que**
- il est prévu un moyen à récupération pour l'alimentation en retour en énergie lorsque le rouleau d'entraînement (2) est utilisé pour le freinage de la roue (6) de la remorque; et **en ce que**
- le moyen à récupération comporte le moteur d'entraînement (1) qui est apte à fonctionner en tant que générateur pour l'alimentation en retour en énergie.

6. Entraînement de manoeuvre selon la revendication 5, **caractérisé en ce que** pour le fonctionnement du moteur d'entraînement (1) en tant que générateur, il est possible de produire un court-circuit de l'enroulement ou une induction d'un champ inverse.

7. Entraînement de manoeuvre selon l'une des revendications 3 à 6, lorsqu'elles dépendent de la revendication 3, **caractérisé en ce qu'**il est prévu un embrayage (20) entre le moteur (1) et le moyen de transmission (4) pour l'amortissement de vibrations et/ou **en ce qu'**il est prévu un moyen de freinage (8).

8. Entraînement de manoeuvre selon la revendication 7, **caractérisé en ce que**
- le moyen de freinage (8) est agencé côté face frontale par rapport au moteur d'entraînement (1); et/ou **en ce que**
- le moyen de freinage (8) est fixé au rotor extérieur (9); et/ou
- le moyen de freinage est agencé directement sur un arbre de moteur (12) du moteur d'entraînement (1).

9. Entraînement de manoeuvre selon l'une des revendications précédentes, **caractérisé en ce qu'**une électronique de commande pour le moteur d'entraînement (1) est agencée côté face frontale et/ou latéralement par rapport au moteur d'entraînement (1).

10. Entraînement de manoeuvre selon la revendication 9, **caractérisé en ce que**
- le moteur d'entraînement (1) présente côté face frontale une plaque support (11); et/ou **en ce que**
- l'électronique de commande est agencée sur la plaque support (11).

11. Entraînement de manoeuvre selon l'une des revendications précédentes, **caractérisé en ce que**
- le moteur d'entraînement (1) présente un stator intérieur (10);
- le rotor extérieur (9) entoure le stator intérieur (10) en forme de cloche; et **en ce que**
- le rotor extérieur (9) présente une roue de ventilateur de refroidissement (13).

12. Entraînement de manoeuvre selon la revendication 11, **caractérisé en ce que**
- le moteur d'entraînement (1) présente un stator intérieur (10) fixe;
- le rotor extérieur (9) entoure le stator intérieur (10) en forme de cloche; et **en ce que**
- l'arbre de moteur (12) est fixé sur le rotor extérieur (9) et est guidé à travers l'intérieur du stator intérieur (10).

13. Entraînement de manoeuvre selon l'une des revendications précédentes, **caractérisé en ce que** l'axe de rotation (1a) du moteur d'entraînement (1) s'étend de manière parallèle ou perpendiculaire ou selon un angle oblique par rapport à l'axe de rotation (2a) du rouleau d'entraînement (2).

14. Entraînement de manoeuvre selon l'une des revendications précédentes, **caractérisé en ce qu'**il est prévu un moyen de déplacement (30) pour déplacer le support (3) entre une position de repos dans laquelle le rouleau d'entraînement (2) est séparé d'une roue (6) de la remorque, et une position d'entraînement dans laquelle le rouleau d'entraînement (2) est pressé contre la roue (6) de la remorque.
